# EUROPEAN PATENT APPLICATION

(11) **EP 1 679 144 A1**
(43) Date of publication of application: **12.07.2006**
(21) Application number: 06250046.7
(22) Date of filing: 05.01.2006
(51) Int. Cl.: B23D 49/16, B25F 5/02

(54) **Power tool with tool storage means**

(30) Priority: 11.01.2005 GB 0500446
(71) Applicant: GMCA PTY Ltd, Victoria 3045 (AU)
(72) Inventor: Roberts, Nigel, Pocklington, York YO42 2QN (GB)
(74) Representative: Tomkinson, Alexandra

(57) **Abstract**

A power tool (2) is provided including a housing (4) and drive means for driving a component to perform an operation on a workpiece. A base plate (6) is provided on a base (26) of said housing and said base plate is brought into contact with the workpiece when performing the operation. The tool further includes storage means adapted to store at least one component when not in use. The storage means are formed at least partially in or on the base plate.

## Description

The invention to which this application relates is to a power tool having means for the storage of one or more components, in a manner which allows the components, when not in use, to be stored on the tool if required.

The need to provide a range of components for selective use with a power tool is well known. In particular the provision of components in the form of a range of saw blades for use with a power tool in the form of, for example, a jigsaw, is known. The range of saw blades allows the saw to be adapted to suit particular cutting requirements by one of the range of saw blades being selected by the user and fitted in the operating portion in the jigsaw so as to be driven by the same and perform the cutting operation.

A problem which is commonly experienced is that the blades are normally not kept with the tool or, at best, are located in a box in which the jigsaw is stored or, more normally, the various blades in the range may be lost or located at different places. In any case, the location of the appropriate blade which is required to be used can be problematic to the user, time consuming and, as a result, can lead to a degree of frustration.

The problem has previously been appreciated and several known attempts have been made to allow the storage of the blades in one place either in a box or, more relevantly to this application, on the tool itself. All of the known approaches involve the provision of the storage of the blades on or within the plastic housing of the tool. While providing a solution, these approaches are themselves problematic in that the moulding of the housing has to be specially adapted which can cause expense; additional plastic components are required to be provided to allow for the storage to be achieved, and the manipulation by the user of the plastic storage means and/or housing in use causes the risk of breakage of the plastic storage means and hence potential damage to the power tool itself.

The aim of the present invention is to provide a power tool with storage means for the storage of one or more components such as for example blades, and to provide the storage means such that the components are stored on the power tool in an unobtrusive manner, yet are accessible, and minimising the risk of damage to the power tool.

In a first aspect of the invention there is provided a power tool, said power tool including a housing and drive means for driving a component to perform an operation on a workpiece, a base plate being provided on a base of said housing and said base plate being brought into contact with the workpiece when performing the operation, said tool further including storage means adapted to store at least one component when not in use, and wherein the storage means are formed at least partially in or on the base plate.

Thus, storage means are defined in or on the base plate of the power tool to allow for the selective storage of components of the power tool when said components are not being used. The storage means can be used to store the main working component of the power tool and/or can be used to store one or more spare parts, repair tools and/or the like.

The drive means typically includes a motor for driving movement of said tool component in use. The power tool is typically an electric power tool and can be powered by battery power or mains power supply for example.

In one embodiment the storage means are formed at the interface between the base of the housing and the base plate. In an alternative embodiment the storage cavity of the storage means is formed at least partially in or on the base plate. The housing base or at least one additional sheet of material can be provided to form at least one face of the cavity and/or cover means for the cavity.

In one embodiment the base plate is formed of metal or metal alloy, in one embodiment by die casting. The housing is preferably formed of plastics material.

In one embodiment the storage means include one or more channels, each channel provided to receive at least part of at least one of the components therein. The component preferably enters and leaves the storage means through an entry/exit part of the channel.

A component can be slidably located in said channel and/or storage cavity, placed in and/or the like.

Preferably the entire component is located in the channel when stored therein. In one embodiment the channel is substantially enclosed with the exception of the entry/exit port. A removable cover can be provided over or in association with said entry/exit port to close the same if required.

In one embodiment the channel and/or storage means can be provided with an aperture or window therein to allow the interior of the channel to be viewed and hence a visual indication provided as to whether there is a component stored therein or not. In one embodiment part of the storage means can be formed from substantially transparent material to allow a user to view whether a component is located in said storage means.

In one embodiment there is a frictional engagement between at least part of the component and the channel and/or one or more walls of the storage means to allow the retention of the component therein until the user exerts a removal force thereon to remove the component.

Preferably engagement means are provided in said channel, cavity and/or storage means for allowing said one or more components to be retained in position when stored. The engagement means can include any suitable means, such as magnetic means, one or more clips, ties, screws, hook and loop fastening, inter-engaging members and/or the like.

In one embodiment the entry/exit part of each channel is provided with a retaining or closure means which is movable by the user between an open position to allow access to the channel, and a closed position to retain the component in the channel. Thus, for example the closure means can be removable to allow access to the channel and/or storage means.

In one embodiment the storage means, channel or cavity is defined in the base of the base plate.

The cover or closure means of said storage means can include a base plate part for location over a base of said base plate to close the same and an end plate part for location over an end of said base plate to close the same.

Preferably one of the base plate part or end plate part engages with the other of said base plate part or end plate part to maintain the same in position. For example, a protrusion on one of the plate parts can engage with a recess in the other of the plate parts.

Preferably the cover means includes retaining means for detachably attaching the cover means to the base plate. The retaining means can include any or any combination of one or more screws, clips, ties, inter-engaging members, hook and loop fastenings and/or the like.

The cover means can fit substantially flush with one or more surfaces of the base plate which define an opening of the storage means when the cover means is in a closed or fitted condition.

In one embodiment the channel is formed in the die casting of the base plate at the time of forming the same.

The base plate in one embodiment includes at least two arm portions and storage means/channels are defined in each of said arm portions.

In one embodiment each channel has an open side which is enclosed directly by the housing base or by a cover member which lies flush with the internal face of the base plate.

One or more parts of the component or parts associated with the component can protrude from said base plate to allow a user to easily grip and slide the component from the storage means when access to the component is required.

The base plate can be removable from said power tool if required. As such, in a further aspect of the present invention there is provided a base plate for use with a power tool, said base plate having storage means associated in or on the same.

According to a further aspect of the present invention there is provided a method of using a base plate of a power tool to store one or more components of said power tool when not in use.

The invention is of particular use when the power tool is a jigsaw and the components are a series of blades for selective attachment to the drive means of the jigsaw.

A specific embodiment of the invention is now described with reference to the accompanying drawings, wherein:-
Figure 1 shows a perspective view of a power tool in the form of a jigsaw; and
Figure 2 shows a perspective view of the underside of the base of the jigsaw.

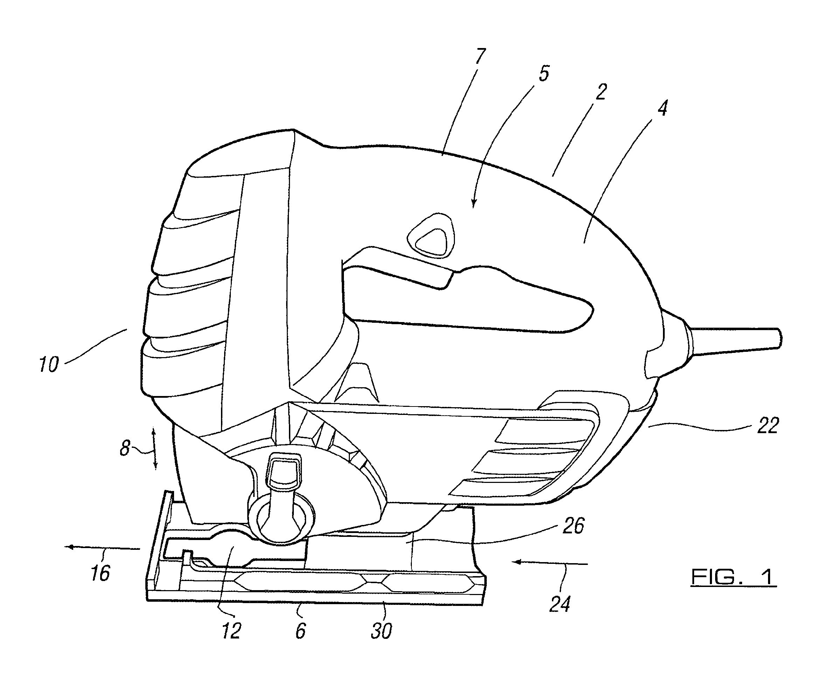

With reference to Figure 1 the jigsaw 2 is formed with a housing 4, a housing base 26 and a base plate or shoe 6. Within the plastic housing, which is typically moulded, there is provided a motor connected to drive, in a reciprocating manner, a component in the form of a saw blade in the direction indicated by the arrow 8 at the front end 10 of the jigsaw. The blade attached to the drive means passes through a port 12 in the base plate 6 and against a workpiece (not shown) against which the underside 30 of the base plate 6 is placed in use. Advancing the jigsaw 2 in the direction 16 allows the blade to cut through the workpiece. The base plate is used to support the tool against the work piece in use to increase the efficiency and accuracy of the cutting action of the jigsaw. The tool also has a handle 5 located adjacent a top 7 of the tool, side walls, a front and rear.

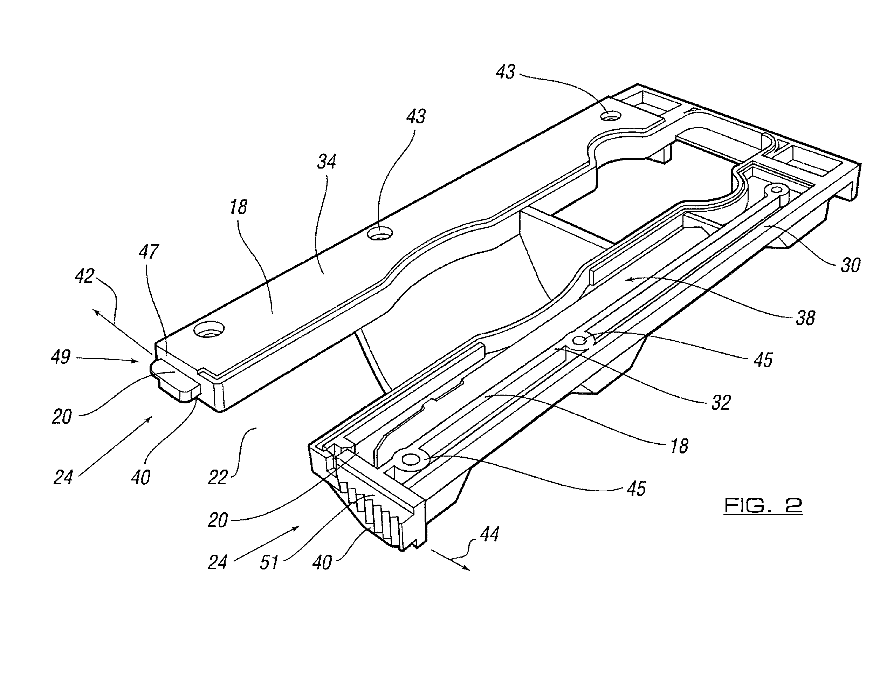

In accordance with the invention, storage means in the form of channels 18 are provided as shown in Figure 2 in the base of base plate 6. Each channel has an entry/exit port 20 at an end of the base plate which allows the blades which are not being used to be stored by sliding the same lengthwise into one of the channels 18. In the arrangement shown the blades to be stored are introduced from the rear 22 of the jigsaw as indicated by arrow 24. However, the blades can simply be placed into the channel via the base rather than the end if required.

Thus, in different embodiments of the present invention a tool component or blade could be slid into the channel from the rear and/or front of the base plate and/or can be placed into the channel via the base and/or top of the base plate.

In the illustrated embodiment the channels 18 are formed in the base plate to lie adjacent the interface between the base plate 16. In figure 2, which shows the underside 30 of the base plate of the housing with two recesses 32, 34 formed therein. Covers are provided for each of the recesses with one cover 36 shown in position to complete the channel 18. The other cover is removed for reference purposes and shows the blade 38 positioned in the recess. However it should be appreciated that these covers 36 can both normally be permanently fixed in position as access can be gained to the blades via the entry/exit ports 20.

To prevent the blades from falling out of the channels, through the entry/exit ports retaining means or end plate parts 40 in the form of clips are provided. The clips can each be moved from a closed position as illustrated, in Figure 2, to retain the blades in the channel, to an open position by movement by the user as indicated in directions 42, 44 respectively to open the entry/exit ports and allow the blade to be slid out or in for use. Typically the fitting of the base plate onto the base serves to complete the forming of the power tool. Preferably the channel is of a length to accommodate all of the blade length and therefore allows the same to be stored securely in position in the channel, typically with a friction fit in addition to the retaining means 40. The channels can be of a depth to receive one or more blades in each, to suit particular design requirements.

In one embodiment the cover 36 engages with the end plate part 40 to retain the end plate part in position. One or more screw holes 43 are defined in the cover 36 and are aligned with screw holes 45 defined in the storage cavity. Screws are located through the screw holes 43, 45 to retain cover 36 onto the base plate. A protrusion 47 provided at an end 49 of cover plate 36 engages in a recess 51 defined in end plate part 40 to retain the end plate part in position to close said entry/exit when said base plate cover 36 is engaged to the base plate.

The provision of the blades stored in the channel or channels means that the blades can be retrieved quickly for subsequent fitting to perform a cutting operation as required and can be returned or placed into the channel with no manipulation of the housing required and also ensures that all of the features of the jigsaw are available for selective use all of the time, by the placing of the appropriate blade in the operating position. Furthermore by forming the channels in the metal base plate so the storage means are more robust and hence less susceptible to breakage.

## Claims

1. A power tool, said power tool including a housing and drive means for driving a component to perform an operation on a workpiece, a base plate being provided on a base of said housing and said base plate being brought into contact with the workpiece when performing the operation, said tool further including storage means adapted to store at least one component when not in use, and wherein the storage means are formed at least partially in or on the base plate.

2. A power tool according to claim 1 wherein the storage means are formed at the interface between the base of the housing and the base plate.

3. A power tool according to claim 1 wherein a cavity is defined in the base plate to at least partially form the storage means.

4. A power tool according to claim 3 wherein the base of the housing forms a face or cover of the cavity.

5. A power tool according to claim 3 wherein at least one additional sheet of material forms a face or cover of the cavity.

6. A power tool according to claim 1 wherein the storage means includes at least one channel defined in or on said base plate and at least a part of said at least one component can be located in said channel.

7. A power tool according to claim 6 wherein the component is slidably located in said channel.

8. A power tool according to claim 6 wherein the channel is substantially enclosed with the exception of an entry and/or exit aperture defined in said channel.

9. A power tool according to claim 8 wherein detachable cover means are provided to close said entry and/or exit aperture.

10. A power tool according to claim 1 wherein the storage means has one or more apertures or windows defined therein to allow a user to determine whether a component is located in said storage means.

11. A power tool according to claim 1 wherein there is frictional engagement between at least a part of the component and one or more walls of said storage means to allow at least partial retention of the component therein.

12. A power tool according to claim 1 wherein engagement means are provided in said storage means for allowing said component to engage therewith.

13. A power tool according to claims 3 or 6 wherein the cavity or channel is defined in the base of the base plate.

14. A power tool according to claims 3 or 6 wherein removable cover means are provided on said cavity or channel to retain said component in said cavity or channel.

15. A power tool according to claim 13 wherein said cover means includes a base plate part provided adjacent a base of said base plate and an end plate part provided adjacent an end of said base plate.

16. A power tool according to claim 15 wherein the base plate part engages with the end plate part to maintain the end plate in position.

17. A power tool according to claim 16 wherein a protrusion on one of said base plate or end plate part engages in a recess on the other of said base plate or end plate.

18. A power tool according to claim 14 wherein the cover means includes retaining means for detachably attaching the cover means to said base plate.

19. A power tool according to claim 18 wherein the retaining means includes any or any combination of one or more screws, clips, ties, inter-engaging members or hook and loop fastening.

20. A power tool according to claim 14 wherein the cover means are provided substantially flush with one or more surfaces of the base plate which define an opening of the storage means which the cover means closes when fitted.

21. A power tool according to claim 1 wherein the housing is formed of a plastics material and the base plate is formed of a metal or metal allot.

22. A power tool according to claim 1 wherein the one or more components are introduced into the storage means via the rear or base of the base plate.

23. A power tool according to claim 1 wherein the base plate has at least two arm portions and storage means are defined in each arm portion.

24. A power tool according to claim 20 wherein the storage means are defined in a die casting of the base plate at the time of forming the base plate.

25. A power tool according to claim 1 in the form of a jigsaw and the one or more components in the form of one or more saw blades.
